# FASCICULE DE BREVET EUROPEEN

(11) **EP 0 841 214 B1**
(45) Date de publication et mention de la délivrance du brevet: **19.12.2001**
(21) Numéro de dépôt: 97402630.4
(22) Date de dépôt: 04.11.1997
(51) Int. Cl.: B60Q 1/04, B60Q 1/068, F16B 39/282

(54) **Vis de réglage de position sans jeu pour dispositif d'éclairage ou de signalisation pour véhicule automobile**
Spielfreie Schraubvorrichtung zur Lagerverstellung von Fahrzeugbeleuchtungs- oder Signaleinrichtung
Position adjusting screw mechanism without play for lighting or warning devices on a vehicle

(30) Priorité: 06.11.1996 FR 9613517
(43) Date de publication de la demande: 13.05.1998
(73) Titulaire: VALEO VISION, 93000 Bobigny (FR)
(72) Inventeur: Virette, Jacques, 77410 Claye/Souilly (FR); Casses, Daniel, 93370 Montfermeil (FR)
(74) Mandataire: Le Forestier, Eric

(56) Documents cités:
- EP-A- 0 418 002
- DE-A- 4 228 889
- US-A- 4 220 187

## Description

L'invention concerne les dispositifs d'éclairage ou de signalisation pour véhicule automobile, selon le préambule de la revendication 1.

On connaît un projecteur pour véhicule automobile, comportant un support présentant un orifice taraudé, et une vis de réglage de position comportant un corps fileté reçu dans l'orifice du support en réalisant une liaison vis-écrou avec celui-ci. La vis présente une extrémité d'appui venant en contact avec une surface d'une pièce de la carrosserie du véhicule après montage du projecteur. Lorsqu'on fait tourner la vis de réglage suivant son axe, on provoque une modification de la distance entre le support du projecteur et la pièce de carrosserie parallèlement à l'axe de la vis. On règle ainsi comme on le souhaite la position du projecteur par rapport à la carrosserie. La vis de réglage est creuse. Une fois ce réglage effectué, la vis de réglage reçoit une vis de serrage prenant appui contre une extrémité de manoeuvre de la vis de réglage et contre la pièce de carrosserie pour immobiliser rigidement ensemble la vis de réglage et la pièce de carrosserie. Le document DE-42 28889-A1 décrit un projecteur de ce type.

Le filet du corps et le taraudage de l'orifice sont réalisés de façon à autoriser un certain jeu longitudinal suivant l'axe du corps ainsi qu'un certain jeu transversal perpendiculairement à l'axe lorsque la vis de réglage est reçue dans l'orifice, en vue de faciliter la manoeuvre de la vis. Or, après fixation rigide de la vis de réglage à la carrosserie, le jeu longitudinal persiste et résulte en un jeu longitudinal suivant l'axe entre le projecteur et la pièce de carrosserie. Lorsque le véhicule roule, ce jeu produit des bruits et des vibrations nuisibles pour le confort des passagers et pouvant entraîner une usure prématurée des pièces.

Un but de l'invention est de fournir un dispositif d'éclairage ou de signalisation assurant une immobilisation sans jeu suivant l'axe longitudinal des éléments reliés par la vis de réglage.

En vue de la réalisation de ce but, on prévoit selon l'invention un dispositif d'éclairage ou de signalisation pour véhicule automobile, présentant les caractéristiques de la revendication 1.

Ainsi, lorsque l'extrémité d'appui vient en contact avec la pièce servant de référence et/ou lors du serrage ultérieur de la vis de réglage contre cette pièce suivant la direction axiale, la pièce de référence sollicite en retour la vis sur la zone de contact en provoquant le basculement en rotation de la vis par rapport à l'organe dans l'orifice duquel elle est reçue. Ce basculement se produit autour d'un axe de rotation perpendiculaire à l'axe longitudinal de la vis. Le basculement provoque la venue du filet de la vis en butée contre le taraudage de l'orifice, en deux points situés de part et d'autre de l'axe, les butées étant orientées suivant des directions parallèles à l'axe longitudinal et opposées l'une à l'autre. Il en résulte une annulation du jeu longitudinal entre le filet de la vis et le taraudage de l'organe. Sur le véhicule, on supprime ainsi bruits et vibrations. Ce basculement supprime également le jeu transversal perpendiculairement à l'axe longitudinal par mise en butée de la vis de réglage contre l'organe ou le filet de l'organe.

Avantageusement, la zone de contact s'étend sur un secteur d'angle autour de l'axe longitudinal inférieur à 180°.

Avantageusement, la zone de contact est constituée par un point.

Ainsi, la pièce de référence sollicite la vis de réglage à une distance importante de son axe. On obtient donc facilement le basculement de la vis au moyen d'un effort même modéré.

Avantageusement, l'extrémité d'appui présente au moins trois points définissant un premier plan d'appui de l'extrémité d'appui sur une surface plane, ce plan étant incliné par rapport à la direction perpendiculaire à l'axe, les trois points délimitant un secteur d'angle autour de l'axe supérieur à 180°.

Ainsi, on définit un plan d'appui stable de l'extrémité d'appui contre la pièce de référence après le basculement de la vis, par exemple en vue d'un serrage ultérieur stable de la vis de réglage par une vis de serrage contre la pièce de référence.

Avantageusement, l'extrémité d'appui présente une face plane continue définissant le premier plan d'appui.

Avantageusement, l'extrémité d'appui est constituée par la face plane.

Avantageusement, la vis présente une extrémité de manoeuvre opposée longitudinalement à l'extrémité d'appui et présente au moins trois points définissant un deuxième plan d'appui de l'extrémité de manoeuvre sur une surface plane, ce deuxième plan d'appui étant sensiblement parallèle au premier plan d'appui, les trois points délimitant un secteur d'angle supérieur à 180° autour de l'axe.

Ainsi, lors du serrage ultérieur de la vis de réglage contre la pièce de référence depuis l'extrémité de manoeuvre, on sollicite la vis de réglage, non pas parallèlement son axe, mais perpendiculairement au deuxième plan d'appui et parallèlement au premier plan d'appui. On favorise donc le basculement de la vis et son maintien stable en position basculée.

Avantageusement, l'extrémité de manoeuvre présente une face plane continue définissant le deuxième plan d'appui.

Avantageusement, la vis de réglage présente une extrémité de manoeuvre opposée longitudinalement à l'extrémité d'appui.

D'autres caractéristiques et avantages de l'invention apparaîtront encore dans la description qui va suivre d'un mode préféré de réalisation donné à titre d'exemple non limitatif. Aux dessins annexés :

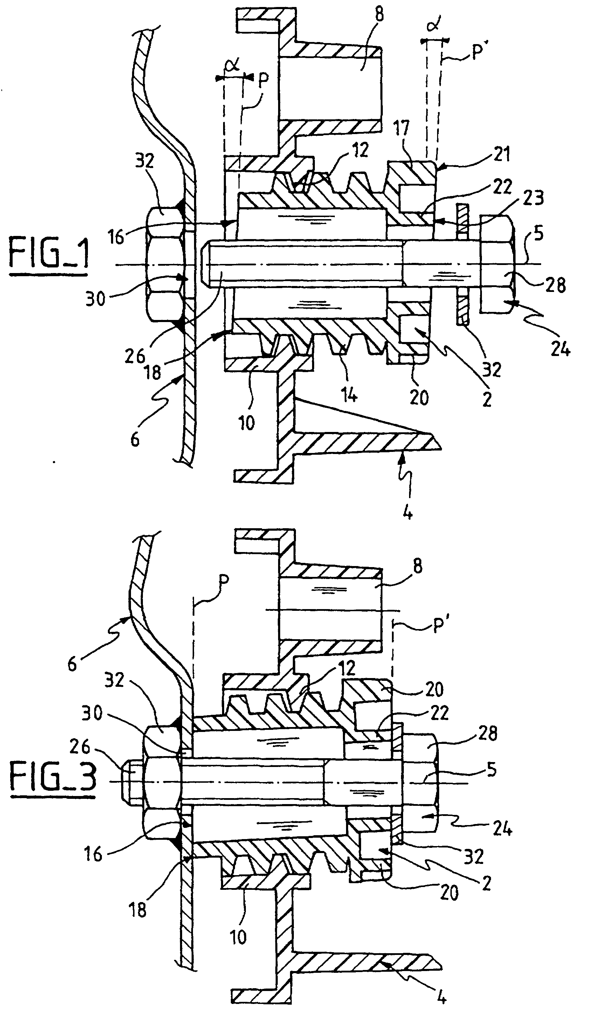

- la figure 1 est une vue en coupe axiale d'une vis de réglage de position selon l'invention associée à un projecteur et à une pièce de carrosserie, avant basculement et serrage de la vis de réglage;

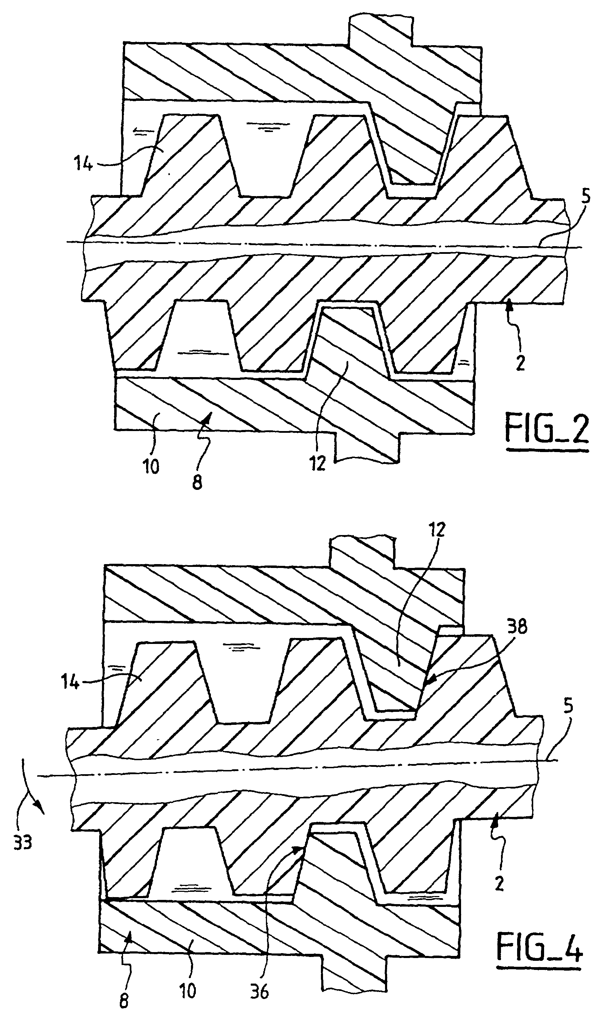

- la figure 2 est une vue partielle à plus grande échelle d'un détail de la figure 1;
- la figure 3 est une vue analogue à la figure 1 représentant le dispositif après basculement et serrage de la vis de réglage de position; et
- la figure 4 est une vue partielle à plus grande échelle d'un détail de la figure 3.

La vis de réglage 2 est destinée à permettre le réglage de la position d'un dispositif de signalisation ou d'éclairage, notamment d'un projecteur 4 de véhicule automobile par rapport à une pièce 6 de la carrosserie du véhicule servant de référence. Pour cela, le projecteur comporte un support 8 comprenant un conduit cylindrique 10 taraudé en présentant un filet 12 réduit à environ un tour. Ce conduit 10 constitue un orifice de réception de la vis de réglage 2.

La vis de réglage 2 comporte un corps creux de forme générale cylindrique d'axe longitudinal 5 présentant une cavité centrale. Le corps est fileté sur une face externe en présentant un filet 14 s'étendant sur plusieurs tours. Le filet 14 du corps est adapté à coopérer avec le filet 12 du conduit 10 en réalisant une liaison vis-écrou. Les filets 12, 14, le corps et le conduit sont dimensionnés pour que cette liaison ménage, entre le corps et le conduit, un jeu longitudinal suivant l'axe 5 ainsi qu'un jeu transversal perpendiculairement à cet axe.

Le corps présente une première et une deuxième extrémités 16 et 17, opposées longitudinalement l'une à l'autre suivant l'axe 5. La première extrémité 16 est constituée par une face plane légèrement inclinée par rapport à une direction perpendiculaire à l'axe 5, par exemple en formant un angle α d'environ 30'. Cette face 16 s'étend depuis la face externe du corps jusqu'à une face interne du corps. Elle a une forme générale annulaire, est continue, et couvre un secteur d'angle de 360° autour de l'axe 5. La première extrémité 16 constitue une extrémité d'appui de la vis de réglage 2. En outre, elle définit un premier plan d'appui P de cette extrémité 16 sur une surface plane, ce plan d'appui P étant incliné par rapport à la direction perpendiculaire à l'axe 5. L'inclinaison de la face 16 entraîne qu'elle présente un point géométrique unique 18 s'étendant en avant suivant la direction de l'axe 5 par rapport aux autres points de cette face. Ce point 18 constitue une zone de contact entre l'extrémité d'appui 16 et une surface plane perpendiculaire à l'axe 5.

A la deuxième extrémité 17, le corps comporte deux collerettes 20, 22 de forme cylindrique d'axe 4. La collerette 22, que nous appellerons collerette interne, présente une face externe de rayon inférieur au rayon d'une face interne de la collerette 20, que nous appellerons collerette externe. La collerette interne 22 s'étend en regard de la collerette externe 20. Chaque collerette présente un bord plan 21, 23. Les deux bords sont coplanaires et inscrits dans un même plan P', que nous appellerons deuxième plan d'appui. Ce deuxième plan d'appui P' est parallèle au premier plan d'appui P et donc incliné pareillement par rapport à une direction perpendiculaire à l'axe 5. La deuxième extrémité 17 est une extrémité de manoeuvre. Le bord 23 de la collerette interne 22 a une forme générale annulaire continue et s'étend sur un secteur d'angle autour de l'axe 5 de 360°. Il s'étend de la face externe à une face interne de la collerette interne 22. Le bord 23 de la collerette interne 22 définit ainsi le deuxième plan d'appui P' de l'extrémité de manoeuvre 17 sur une surface plane. L'extrémité de manoeuvre 17 est creuse en son centre et communique avec la cavité du corps.

La vis de réglage de position 2 est associée à une vis de serrage 24 comportant une tige filetée 26 et une tête 28 présentant une face plane perpendiculaire à un axe de la tige et contiguë à celle-ci.

La pièce de carrosserie 6 comporte une paroi plane qui présente un orifice 30 de diamètre inférieur au diamètre de la face interne du corps de la vis de réglage 2 et supérieur au diamètre hors tout de la tige filetée 26 de la vis de serrage pour pouvoir être traversée par celle-ci. Un écrou 32 est soudé à la pièce 6 contre une face de celle-ci destinée à être opposée au support 8, en étant coaxial à l'orifice 30. La pièce de carrosserie 6 présente une face plane autour de l'orifice 30 et en regard de l'extrémité d'appui 16 de la vis de réglage.

Le montage est effectué de la façon suivante.

On engage la vis de réglage 2 dans le conduit 10 du support pour mettre les deux filets 12 et 14 en prise mutuelle, sans enfoncer profondément la vis de réglage dans le conduit. On installe ensuite le projecteur sur le véhicule, le conduit 10 venant en regard de l'orifice 30 de la pièce 6 de carrosserie, avec l'axe 5 de la vis de réglage perpendiculaire à la face plane de cette pièce, l'orifice 30 étant centré sur l'axe 5. Le montage du projecteur 4 sur le véhicule est adapté pour que la zone de contact 18 de la vis de réglage 2 vienne en appui contre la pièce 6 suivant l'axe 5. Le support 8 s'étend à distance de la pièce 6.

On tourne ensuite la vis de réglage 2 à l'aide de l'extrémité de manoeuvre 17 pour régler la position du support 8 par rapport à la pièce 6 de carrosserie suivant l'axe 5. On installe alors la vis de serrage 24 dans la vis de réglage 2, la face plane de la tête 28 venant en appui contre le bord 23 de l'extrémité de manoeuvre 17 avec interposition entre elles d'une rondelle 32. La tige 26 traverse la vis de réglage 2 suivant l'axe 5 et l'orifice 30 de la pièce 6, et vient en engagement avec l'écrou 32 en réalisant une liaison vis-écrou.

On serre ensuite la vis de serrage 24 pour immobiliser la vis de réglage 2 par rapport à la pièce de carrosserie 6. Si cela ne s'est pas produit lors du réglage précité de la position du projecteur, ce serrage entraîne la sollicitation par la pièce 6 de la vis de réglage 2 via la zone de contact 18. Cela provoque le basculement en rotation de la vis de réglage 2 par rapport au conduit 10 autour d'un axe perpendiculaire à l'axe 5, comme indiqué par la flèche 33. Il en résulte la mise en butée du filet 14 de la vis de réglage contre le filet 12 du conduit 10, et ce en deux points 36, 38 opposés de part et d'autre de l'axe 5. Le point 36 est situé au droit de la zone de contact 18 parallèlement à l'axe 5. A ce point 36, le filet 14 de la vis de réglage sollicite le filet 12 du support parallèlement à l'axe 5 en direction opposée à la pièce 6. Au point 38, le filet 14 de la vis de réglage sollicite le filet 12 du support parallèlement à l'axe 5 en direction de la pièce 6. Le jeu longitudinal parallèlement à l'axe 5 entre la vis de réglage 2 et le support 8 se trouve ainsi annulé.

Par ailleurs, le filet 14 de la vis de réglage pourra venir en butée contre le filet 12 du conduit 10 et/ou la face interne suivant la direction perpendiculaire à l'axe 5. Le jeu transversal à l'axe 5 se trouve ainsi également annulé. On obtient une fixation rigide de la vis de réglage 2 au support 8.

Bien entendu, on pourra apporter à l'invention de nombreuses modifications sans sortir du cadre de celle-ci.

Ainsi, la zone de contact 18 pourra être une surface étendue et non pas une zone réduite à un point.

Le premier plan d'appui P à l'extrémité d'appui 16 pourra être défini par une surface plane discontinue, voire par seulement trois points.

## Revendications

1. Dispositif d'éclairage ou de signalisation pour véhicule automobile, présentant un orifice (10) ayant un taraudage (12) et comprenant une vis de réglage de position (2) comportant un corps creux fileté reçu dans l'orifice en coopérant avec le taraudage (12), le dispositif comportant des moyens de serrage (24) de la vis de réglage (2) contre une pièce (6) du véhicule aptes à être reçus dans la vis de réglage, le corps creux fileté ayant un axe longitudinal (5) et une extrémité d'appui (16) présentant une zone de contact (18) telle qu'un contact entre l'extrémité d'appui et une surface plane perpendiculaire à l'axe longitudinal (5) s'effectue avant serrage uniquement sur la zone de contact, **caractérisé en ce que** la zone de contact est conformée s'étendant en avant suivant la direction de l'axe longitudinal (5) par rapport aux autres points de l'extrémité d'appui (16) de sorte qu'une sollicitation de la vis de réglage (2) sur la zone de contact parallèlement à l'axe longitudinal (18) génère un moment de rotation de la vis autour d'un axe de rotation perpendiculaire à l'axe longitudinal (5).

2. Dispositif selon la revendication 1, **caractérisé en ce que** la zone de contact (18) s'étend sur un secteur d'angle autour de l'axe longitudinal (5) inférieur à 180°.

3. Dispositif selon la revendication 1 ou 2, **caractérisé en ce que** la zone de contact (18) est constituée par un point.

4. Dispositif selon la revendication 2 ou 3, **caractérisé en ce que** l'extrémité d'appui (16) présente au moins trois points (16) définissant un premier plan d'appui (P) de l'extrémité d'appui sur une surface plane, ce plan étant incliné par rapport à une direction perpendiculaire à l'axe (5), les trois points délimitant un secteur d'angle autour de l'axe supérieur à 180°.

5. Dispositif selon la revendication 4, **caractérisé en ce que** l'extrémité d'appui présente une face plane continue (16) définissant le premier plan d'appui (P).

6. Dispositif selon la revendication 5, **caractérisé en ce que** l'extrémité d'appui est constituée par la face plane (16).

7. Dispositif selon l'une quelconque des revendications 4 à 6, **caractérisé en ce que** la vis présente une extrémité de manoeuvre (17) opposée longitudinalement à l'extrémité d'appui (16) et présente au moins trois points (23) définissant un deuxième plan d'appui (P') de l'extrémité de manoeuvre (17) sur une surface plane, ce deuxième plan d'appui étant sensiblement parallèle au premier plan d'appui (P), les trois points délimitant un secteur d'angle supérieur à 180° autour de l'axe (5).

8. Dispositif selon la revendication 7, **caractérisé en ce que** l'extrémité de manoeuvre (17) présente une face plane continue (23) définissant le deuxième plan d'appui (P').

9. Dispositif selon l'une quelconque des revendications 1 à 8, **caractérisé en ce que** la vis de réglage (2) présente une extrémité de manoeuvre (17) opposée longitudinalement à l'extrémité d'appui (16).

## Patentansprüche

1. Vorrichtung zur Beleuchtung oder Signalgebung für ein Kraftfahrzeug, die eine Öffnung (10) mit einem Innengewinde (12) aufweist und eine Positionseinstellschraube (2) mit einem hohlen Gewindekörper umfaßt, welcher durch Zusammenwirken mit dem Innengewinde (12) in der Öffnung aufgenommen ist, wobei die Vorrichtung Mittel zum Anziehen (24) der Einstellschraube (2) gegen ein Fahrzeugteil (6) umfaßt, die in der Einstellschraube aufgenommen werden können, wobei der hohle Gewindekörper eine Längsachse (5) und ein Anlageende (16) besitzt, welches einen Kontaktbereich (18) aufweist, so daß ein Kontakt zwischen dem Anlageende und einer ebenen, quer zur Längsachse (5) gerichteten Fläche vor dem Anziehen nur in dem Kontaktbereich zustande kommt,
**dadurch gekennzeichnet, daß** der Kontaktbereich so ausgebildet ist, daß er sich bezüglich der anderen Punkte des Anlageendes (16) nach vorne in Richtung der Längsachse (5) erstreckt, so daß durch eine parallel zur Längsachse (18) erfolgende Belastung der Einstellschraube (2) im Kontaktbereich ein Drehmoment der Schraube um eine quer zur Längsachse (5) verlaufende Drehachse erzeugt wird.

2. Vorrichtung nach Anspruch 1,
**dadurch gekennzeichnet, daß** sich der Kontaktbereich (18) über einen Winkelbereich von weniger als 180° um die Längsachse (5) erstreckt.

3. Vorrichtung nach Anspruch 1 oder 2,
**dadurch gekennzeichnet, daß** der Kontaktbereich (18) durch einen Punkt gebildet wird.

4. Vorrichtung nach Anspruch 2 oder 3,
**dadurch gekennzeichnet, daß** das Anlageende (16) wenigstens drei Punkte (16) aufweist, die eine erste Anlageebene (P) für das Anlageende auf einer ebenen Fläche bilden, wobei diese Ebene in bezüglich einer zur Achse (5) querverlaufenden Richtung geneigt ist und die drei Punkte einen Winkelbereich von mehr als 180° um die Achse begrenzen.

5. Vorrichtung nach Anspruch 4,
**dadurch gekennzeichnet, daß** das Anlageende eine fortlaufende ebene Seite (16) aufweist, die die erste Anlageebene (P) bildet.

6. Vorrichtung nach Anspruch 5,
**dadurch gekennzeichnet, daß** das Anlageende durch die ebene Seite (16) gebildet wird.

7. Vorrichtung nach einem der Ansprüche 4 bis 6,
**dadurch gekennzeichnet, daß** die Schraube ein Bedienungsende (17) aufweist, welches dem Anlageende (16) in Längsrichtung entgegengesetzt ist, und wenigstens drei Punkte (23) aufweist, die eine zweite Anlageebene (P') des Bedienungsendes (17) auf einer ebenen Fläche bildet; wobei diese zweite Anlageebene im wesentlichen parallel zur ersten Anlageebene (P) ist und die drei Punkte einen Winkelbereich von mehr als 180° um die Achse (5) begrenzen.

8. Vorrichtung nach Anspruch 7,
**dadurch gekennzeichnet, daß** das Bedienungsende (17) eine fortlaufende ebene Seite (23) aufweist, die die zweite Anlageebene (P') bildet.

9. Vorrichtung nach einem der Ansprüche 1 bis 8,
**dadurch gekennzeichnet, daß** die Einstellschraube (2) ein Bedienungsende (17) aufweist, welches dem Anlageende (16) in Längsrichtung entgegengesetzt ist.

## Claims

1. Lighting or indicating device for a motor vehicle, having an orifice (10) with a thread (12) and comprising a position adjustment screw (2) having a hollow threaded body received in the orifice, cooperating with the thread (12), the device having means (24) of clamping the adjustment screw (2) against a part (6) of the vehicle, able to be received in the adjustment screw, the hollow threaded body having a longitudinal axis (5) and a bearing end (16) having a contact zone (18) such that contact between the bearing end and a flat surface perpendicular to the longitudinal axis (5) takes place before clamping solely on the contact zone, **characterised in that** the contact zone is shaped, extending forwards in the direction of the longitudinal axis (5) with respect to the other points of the bearing end (16), so that acting on the adjustment screw (2) on the contact zone parallel to the longitudinal axis (18) generates a rotation moment of the screw about a rotation axis perpendicular to the longitudinal axis (5).

2. Device according to Claim 1, **characterised in that** the contact zone (18) extends over a sector of an angle about the longitudinal axis (5) less than 180°.

3. Device according to Claim 1 or 2, **characterised in that** the contact zone (18) consists of a point.

4. Device according to Claim 2 or 3, **characterised in that** the bearing end (16) has at least three points (16) defining a first bearing surface (P) for the bearing end on a flat surface, this plane being inclined with respect to a direction perpendicular to the axis (5), the three points delimiting a sector of an angle about the axis greater than 180°.

5. Device according to Claim 4, **characterised in that** the bearing end has a continuous flat face (16) defining the first bearing plane (P).

6. Device according to Claim 5, **characterised in that** the bearing end consists of the flat face (16).

7. Device according to any one of Claims 4 to 6, **characterised in that** the screw has a manoeuvring end (17) longitudinally opposite to the bearing end (16) and has at least three points (23) defining a second bearing plane (P') for the manoeuvring end (17) on a flat surface, this second bearing plane being substantially parallel to the first bearing plane (P), the three points delimiting a sector of an angle greater than 180° about the axis (5).

8. Device according to Claim 7, **characterised in that** the manoeuvring end (17) has a continuous flat face (23) defining the second bearing plane (P').

9. Device according to any one of Claims 1 to 8, **characterised in that** the adjustment screw (2) has a manoeuvring end (17) longitudinally opposite to the bearing end (16).
